Europäisches Patentamt

European Patent Office

Office européen des brevets

(19)

(11) Veröffentlichungsnummer: **0 010 743**
**B1**

(12) # EUROPÄISCHE PATENTSCHRIFT

(45) Veröffentlichungstag der Patentschrift:
**17.11.82**

(51) Int. Cl.³: **B 29 B 1/00,** B 29 B 5/00,
B 29 F 3/02

(21) Anmeldenummer: **79104152.8**

(22) Anmeldetag: **26.10.79**

(54) **Dosiervorrichtung.**

(30) Priorität: **02.11.78 DE 2847431**

(43) Veröffentlichungstag der Anmeldung:
**14.05.80 Patentblatt 80/10**

(45) Bekanntmachung des Hinweises auf die Patenterteilung:
**17.11.82 Patentblatt 82/46**

(84) Benannte Vertragsstaaten:
**BE CH FR GB NL SE**

(56) Entgegenhaltungen:
**DE-A-2 601 249**
**DE-A-2 744 183**

(73) Patentinhaber: **Kabel- und Lackdrahtfabriken GmbH,
Casterfeldstrasse 62-64, D-6800 Mannheim 24 (DE)**

(72) Erfinder: **Schmitz, Dieter, Wildbannstrasse 8,
D-6806 Viernheim (DE)**
Erfinder: **Winkler, Gert, Mülhauser Winkel 3,
D-6800 Mannheim 71 (DE)**

(74) Vertreter: **Schnabel, Hartmut, Dr.-Ing., Kabel- und
Lackdrahtfabriken GmbH Patentabteilung
Postfach 1265, D-6800 Mannheim 1 (DE)**

Dosiervorrichtung

Die Erfindung bezieht sich auf eine Vorrichtung zum dosierten Einspeisen flüssiger Komponenten, insbesondere Vernetzungsmittel, zu dem in einem Extruder für die Extrusion kunststoffisolierter Kabel vorgesehenen Kunststoffbasismaterial, mit folgenden durch für die Fortleitung der flüssigen Komponenten dienenden Leitungen verbundenen Bauelementen: Eine Förderpumpe und ein mit dieser verbundener Speicherbehälter mit einem Maximalkontakt, eine diesem Speicherbehälter nachgeschaltete Dosierpumpe sowie Magnetventile, ein Durchflußmesser und ein Pulsationsdämpfer. Ein solche Vorrichtung ist z. B. aus der DE-A1-2 601 249 bekannt.

Bei dieser bekannten Vorrichtung erfolgt die Zugabe des flüssigen Peroxids in Abhängigkeit vom jeweiligen Grundmaterial des für die Herstellung insbesondere VPE-isolierter Starkstromkabel verwendeten Werkstoffes direkt im Extruder. Zu diesem Zweck ist dem die Kunststoffisolierung usw. kontinuierlich herstellenden Extruder eine Dosiervorrichtung vorgeschaltet, bei der das für die Vernetzung z. B. des Polyäthylens benötigte flüssige Peroxid durch eine Förderpumpe zunächst zugeführt wird einem Speicherbehälter, der auf einer gleichmäßig niedrigen Temperatur gehalten wird. Diesem Speicherbehälter ist eine Dosierpumpe nachgeschaltet, die das Peroxid durch eine Meßvorrichtung für den Durchsatz, ein elektrisches Sicherheitsventil mit einer Rotationsmeßvorrichtung, ein weiteres Elektroventil zur Injektionsstelle des Extruders fördert.

Bei dieser bekannten Ausführung sind der Speicherbehälter, die Dosierpumpe, die Meßvorrichtungen sowie Elektroventile hintereinander in Reihe angeordnet, so daß bei Ausfall und/oder Störung bereits eines dieser die Dosiervorrichtung bildenden wesentlichen Aggregate der ordnungsgemäße Fluß des Peroxids in nachteilhafter Weise beeinträchtigt und damit eine einwandfreie Vernetzung des Grundmaterials im Extruder gefährdet wird.

Der Erfindung liegt die Aufgabe zugrunde, eine Vorrichtung der eingangs genannten Art zu schaffen, die unter Vermeidung der Nachteile des Standes der Technik gewährleistet, daß ein ordnungsgemäß kontinuierliches Beschicken des Extruders mit dem auf die erforderliche Reaktionstemperatur gebrachte flüssige Vernetzungsmittel zumindest auch dann noch erfolgt, wenn die Bereitstellung der erforderlichen Durchflußmenge bei einer bekannten Anlage dieser Art nicht mehr sichergestellt wäre.

Die Lösung dieser Aufgabe erfolgt gemäß der Erfindung durch die gemeinsame Anwendung der folgenden Merkmale bei der eingangs erwähnten Vorrichtung:

(a) Das erste Magnetventil ist dem Speicherbehälter vorgeschaltet und diesem Speicherbehälter ein weiterer Speicherbehälter mit vorgeschaltetem Magnetventil parallelgeschaltet, und jeder Speicherbehälter enthält jeweils eine Sonde mit Maximal- und Minimalkontakten;

(b) ein weiteres als Umschaltventil ausgebildete Magnetventil ist mit den Ausgängen des Speicherbehälters verbunden, wobei das Umschaltventil, die beiden Magnetventile und die Maximalkontakte und Minimalkontakte des Speicherbehälters schaltungstechnisch in einer solchen Weise miteinander verknüpft sind, daß der eine Speicherbehälter durch dieses Umschaltventil von der abgehenden Leitung zu dem nachgeschalteten Anlagenteil so lange getrennt ist, bis die Entleerung des anderen Speicherbehälters erfolgt ist und dies durch den Minimalkontakt gemeldet wird, womit durch das Umschaltventil der eine Speicherbehälter mit der abgehenden Leitung verbunden wird und durch Öffnung des Magnetventils der andere Speicherbehälter gefüllt wird;

(c) dem Umschaltventil ist ein Dreiwegehahn und diesem sind zwei parallel geschaltete Reinigungsfilter nachgeschaltet;

(d) der Durchflußmesser ist an die zusammengeschalteten Ausgänge der Filter angeschlossen;

(e) der Pulsationsdämpfer ist an den Durchflußmesser angeschlossen;

(f) zwischen der Speiseleitung zu den Magnetventilen und dem Pulsationsdämpfer ist die Reihenschaltung eines Ausgleichsgefäßes und eines Magnetventils angeschlossen, wobei das Magnetventil beim Umschalten des Umschaltventils so lange geöffnet wird, bis der Behälter des Pulsationsdämpfers aufgefüllt ist;

(g) an den Pulsationsdämpfer ist die Dosierpumpe angeschlossen, welcher eine weitere Dosierpumpe parallgeschaltet ist, welche beide mit je einem drehzahlgeregelten Antriebsmotor gekuppelt sind, deren Drehzahl z. B. in Abhängigkeit eines an einem Potentiometer einstellbaren Sollwertes regelbar ist;

(h) es sind Mittel vorgesehen, durch welche der im Flüssigkeitsdurchflußmesser ermittelte Ist-Wert einem Anzeigegerät mit einstellbaren Toleranzmarken zugeführt wird, wobei bei einer Überschreitung einer dieser Toleranzmarken automatisch von der einen in Betrieb befindlichen Dosierpumpe auf die andere Dosierpumpe umgeschaltet wird;

(i) die Ausgänge der Dosierpumpen sind über Leitungen mit dem Extruder verbunden.

Durch die Maßnahmen entsprechend den Merkmalen (a) und (b) wird erreicht, daß während der Zeit, in welcher der eine Speicherbehälter entleert wird, das Peroxid in dem anderen Speicherbehälter auf die für die Beimischung erforderliche Temperatur gebracht wird, so daß dem Extruder stets gleichmäßig temperiertes Peroxid zugeführt wird.

Durch die Maßnahme entsprechend dem Merkmal (f) ist ein schneller Niveauausgleich im Pulsationsdämpfer im Zeitpunkt des Umschaltens von einem auf den anderen Speicherbehälter hergestellt. Aus dem Ausgleichsgefäß füllt sich dabei zwangsläufig der Pulsationsdämpfer mit einer definierten Flüssigkeitsmenge und stellt Niveaugleichheit mit dem gerade gefüllten Speicherbehälter her.

Weiter wird durch die Maßnahme entsprechend Merkmal (h) erreicht, daß bei Unterschreiten der den Flüssigkeitsdurchflußmesser durchströmenden Flüssigkeitsmenge, was auf eine Störung an der in Betrieb befindlichen Dosierpumpe schließen läßt, auf die zweite Dosierpumpe rechtzeitig umgeschaltet wird. Auf diese Weise ist sichergestellt, daß unter allen Umständen dem Extruder die erforderliche Menge des Vernetzungsmittels zugeführt wird.

Bei den bisher bekannten Anlagen würde, auch wenn dieses Mittel nur kurze Zeit fehlte, das hergestellte Kabel wegen Isolationsfehlern verschrottet werden müssen. Ein solcher Ausfall läßt sich durch die Maßnahmen entsprechend der Erfindung vermeiden. Auch bei Auftreten eines Fehlers an anderen Stellen der Vorrichtung sind Ersatzwege vorgesehen, die unter Umgehung des oder der fehlerhaften Aggregate einen weiterhin ordnungsgemäß kontinuierlichen Fluß des Vernetzungsmittels zum Extruder hin sicherstellen, so daß keine Fehler in der Bemantelung für hergestellte Kabel eintreten können. Es sei darauf hingewiesen, daß es aus der DE-A1-2 744 183 bekannt ist, bei einer Vorrichtung zum kontinuierlichen Schmelzspinnen eines thermoplastischen Polymers mit einem zur Faserbildung geeigneten Molekulargewicht der Dosierpumpe zwei parallelgeschaltete Filter vorzuschalten, von denen jeweils einer zu Reinigungszwecken und einer für den Betrieb zur Verfügung steht. Hier handelt es sich um ein reines Reserveaggregat, was jeweils von Hand umschaltbar ist.

Weiterbildungen der Erfindung sind in den Unteransprüchen beschrieben.

Durch die Maßnahme entsprechend Anspruch 2 wird vermieden, daß ein Pulsieren des Förderstromes eintreten kann, welcher sich bis in den Flüssigkeitsdurchflußmesser bemerkbar machen würde und eine exakte Messung ausschließen würde. Der Pulsationsdämpfer erstreckt sich über die gesamte Höhe der Speicherbehälter.

Weitere Vorteile der in den Unteransprüchen 3 bis 15 vorgeschlagenen Maßnahmen sind in der Beschreibung des Ausführungsbeispiels angegeben. Es zeigt

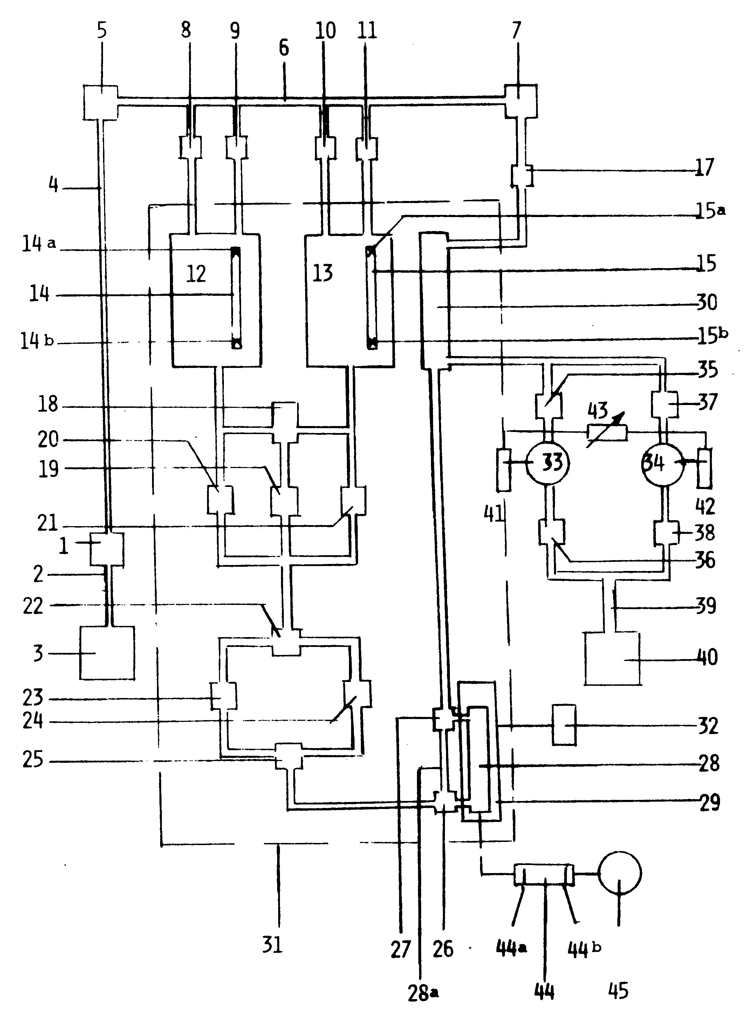

Fig. 1 eine schematische Darstellung der Erfindung und

Fig. 2 ein Schaltschema.

In der Zeichnung, die eine schematische Darstellung der Erfindung beinhaltet, ist mit 1 eine Förderpumpe bezeichnet, die einerseits über eine entsprechende Leitung 2 an einem Vorratsbehälter 3 für das flüssige Peroxid oder dgl. und andererseits über eine Leitung 4 an einen Schmutzfilter 5 angeschlossen ist. Dieser Schmutzfilter 5 ist durch eine Förderleitung 6 mit einem Ausgleichsgefäß 7 verbunden. Weiterhin münden in die Förderleitung 6 zwei handbetätigbare Absperrhähne 8 und 10 sowie zwei Absperrmagnetventile 9 und 11. Dabei sind der Absperrhahn 8 und das parallelliegende Absperrmagnetventil 9 einem Speicherbehälter 12 und der weitere Absperrhahn 10 und das parallelliegende weitere Absperrmagnetventil 11 einem weiteren Speicherbehälter 13 vorgeschaltet.

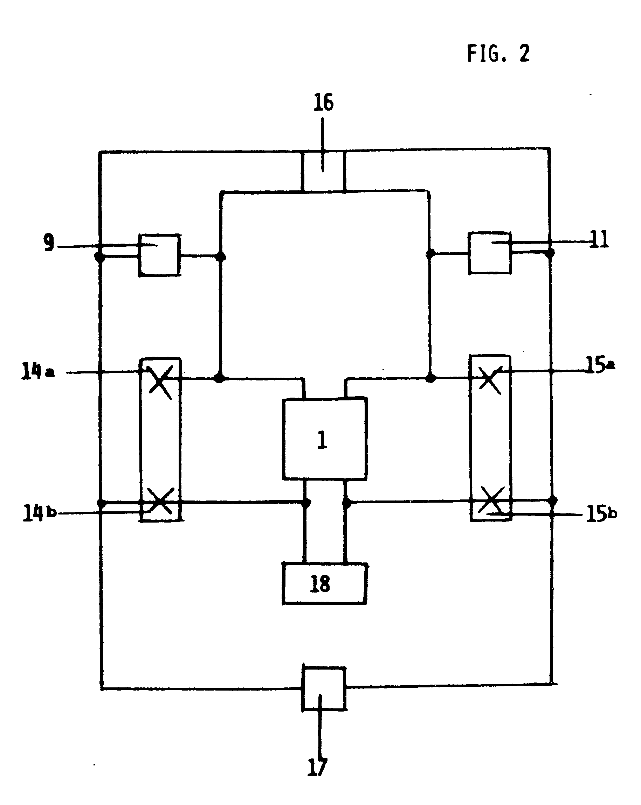

Im Speicherbehälter 12 ist eine Sonde 14 mit einem Maximalkontakt 14a und einem Minimalkontakt 14b und im weiteren Speicherbehälter 13 eine weitere Sonde 15 mit einem weiteren Maximalkontakt 15a und einem weiteren Minimalkontakt 15b eingebracht. Die Kontakte 14a, 14b, 15a, 15b sind — wie in Fig. 2 dargestellt — galvanisch verbunden mit den Absperrmagnetventilen 9 bzw. 11, der Förderpumpe 1 sowie einer Füllstandsanzeige 16. Die Minimalkontakte 14b, 15b öffnen die Absperrmagnetventile 9 bzw. 11 und ein dem Ausgleichsgefäß 7 zugeordnetes, durch ein — nicht dargestelltes — Zeitglied schließbares Einlaufmagnetventil 17, geben die Förderpumpe 1 frei und melden dem Füllstandsanzeiger 16 Materialmangel. Außerdem betätigen die Minimalkontakte 14b, 15b ein in die Ablaufleitungen der Speicherbehälter 12 und 13 eingebrachtes Umschaltmagnetventil 18. Die Maximalkontakte 14a, 15a schließen die Absperrmagnetventile 9 bzw. 11, schalten die Förderpumpe 1 ab und löschen die Materialmangelmeldung der Füllstandsanzeige 16.

Dem Umschaltmagnetventil 18 ist ein handbetätigbarer Ablaufhahn 19 direkt nachgeschaltet. Parallel zum Ablaufhahn 19 sind zwei handbetätigbare weitere Ablaufhähne 20, 21 vorgesehen, wobei der eine weitere Ablaufhahn 20 mit dem weiteren Speicherbehälter 12 und der andere weitere Ablaufhahn 21 mit dem weiteren Speicherbehälter 13 direkt verbunden ist.

Diese drei Ablaufhähne 19, 20 und 21 arbeiten gemeinsam auf einen Filtereinlaßhahn 22, der als handbetätigbarer Dreiwegehahn ausgebildet ist. Am Filtereinlaßhahn 22 sind zwei parallelgeschaltete Reinigungsfilter 23, 24 angeschlossen, die gemeinsam in einen Filterablaufhahn 25 einmünden. Dieser Filterablaufhahn 25 ist ein handbetätigbarer Dreiwegehahn. Ebenfalls ein handbetätigbarer Dreiwegehahn ist der dem Filterablaufhahn 25 nachgeschaltete Verteilerhahn 26, dem ein weiterer Verteilerhahn 27 nachgeordnet ist. Zwischen dem Verteilerhahn 26 und dem weiteren Verteilerhahn 27 ist ein Flüssigkeitsdurchflußmesser 28 und parallel dazu eine Bypassleitung 28a vorgesehen. Dieser Flüssigkeitsdurchflußmesser 28 ist in einem zwangsfremdbelüfteten Gehäuse 29 untergebracht. Der Ausgang des weiteren Verteilerhahns 27 ist mit einem Pulsationsdämpfer 30 verbunden.

Die Anlagenteile 12 bis 15 und 18 bis 30 sind in einem abgeschlossenen und unbelüfteten Gerätegehäuse 31 eingebracht. Der Innenraum des Gerätegehäuses 31 wird auf geeignetem, konstantem Temperaturniveau gehalten, um temperaturbedingte Viskositätsschwankungen auszuschalten. Abweichungen werden durch eine — nicht dargestellte — geeignete Temperaturanzeigevorrichtung kenntlich gemacht. Weiterhin ist das Umschaltmagnetventil 18 explosionsgeschützt ausgeführt und der Flüssigkeitsdurchflußmesser 28 in dem zwangsbelüfteten Gehäuse 29 untergebracht. Dieses Gehäuse 29 besitzt eine Überwachungsanlage 32, die eine Inbetriebnahme der Dosiervorrichtung erst zuläßt, wenn der Explosionsschutz sichergestellt ist, oder die nur den Flüssigkeitsdurchflußmesser 28 abschaltet, wenn ein Fehler im Explosionsschutz auftritt.

Der in gleicher Höhe wie die Speicherbehälter 12 und 13 angeordnete Pulsationsdämpfer 30 steht über das Einlaufmagnetventil 17 mit dem Ausgleichsbehälter 7 in Verbindung. Am Pulsationsdämpfer 30 sind weiterhin zwei parallelliegende Dosierpumpen 33 und 34 angeschlossen, die jeweils zwischen zwei handbetätigbaren Pumpenhähnen 35, 36 bzw. 37, 38 angeordnet sind. Die aus jeweils einer Dosierpumpe 33 und den Pumpenhähnen 35 und 36 sowie der Dosierpumpe 34 und den Pumpenhähnen 37 und 38 bestehenden Parallelzweige münden gemeinsam in eine Ausgangsleitung 39, an deren anderes Ende ein Extruder 40 angeschlossen ist.

Den Dosierpumpen 33 bzw. 34 ist jeweils ein drehzahlgeregelter Gleichstromantrieb 41 bzw. 42 zugeordnet. Zur Einstellung des Drehzahlsollwertes der Gleichstromantriebe 41 bzw. 42 ist ein Potentiometer 43 vorgesehen. Weiterhin können die Gleichstromantriebe 41 bzw. 42 in Abhängigkeit von der Schneckendrehzahl des Extruders 40 geregelt werden.

Der aus dem Flüssigkeitsdurchflußmesser 28 gewonnene Istmeßwert wird in einer — nicht dargestellten — Vergleichsstelle mit einem Sollwert, der vom Potentiometer 43 bzw. von der Schneckendrehzahl des Extruders 40 kommt, verglichen und einem Anzeigegerät 44 mit einstellbaren Toleranzmarken 44a, 44b zugeleitet. Überschreitet das Vergleichsergebnis eine dieser Toleranzmarken 44a, 44b, so wird automatisch von der gerade in Betrieb befindlichen Dosierpumpe 33 bzw. 34 auf die andere Dosierpumpe 33 bzw. 34 unter Betätigung einer Störmeldeeinrichtung 45 umgeschaltet.

Um den unterschiedlichen Viskositäten verschiedener flüssiger Zugabemittel Rechnung zu tragen, ist ein — nicht dargestelltes — Eichpotentiometer vorgesehen, mit dem der auf dem Anzeigegerät 44 ersichtliche Meßwert der tatsächlichen Durchflußmengenabweichung angepaßt werden kann (Nullpunktverschiebung).

In Weiterbildung der Erfindung kann zur Überwachung seines Innenraumes im Gerätegehäuse 31 ein Meßfühler eingebracht werden, der bei Auftreten möglicher Zugabemitteldämpfe eine geeignete Warneinrichtung betätigt. Ebenso kann ein weiterer geeigneter Meßfühler auch in der unmittelbaren Umgebung des Gerätegehäuses 31 installiert werden.

Die Förderpumpe 1 füllt den Speicherbehälter 12 bzw. 13 mit Zugabemittel aus dem Vorratsbehälter 3. Dabei wird das Zugabemittel über den Schmutzfilter 5 in die Förderleitung 6 gepumpt. Das in der Förderleitung 6 angeordnete Ausgleichsgefäß 7 füllt sich dabei zwangsläufig mit einer definierten Flüssigkeitsmenge. Aus der Förderleitung 6 füllt sich der jeweilige Speicherbehälter 12 bzw. 13 nach Signalgabe durch den zugeordneten Minimalkontakt 14b bzw. 15b automatisch über ein Absperrmagnetventil 9 bzw. 11. Im Falle des Defektes einer dieser Absperrmagnetventile werden die Speicherbehälter über die handbetätigbaren Absperrhähne 8 bzw. 10 gefüllt. Erreicht der Füllstand im Speicherbehälter 12 bzw. 13 die Höhe des Maximalkontaktes 14a bzw. 15a, so schließen die betreffenden Absperrmagnetventile 9 bzw. 11 selbsttätig, und die Förderpumpe 1 wird automatisch abgeschaltet. Der im Zeitablauf gerade frisch gefüllte Speicherbehälter 12 bzw. 13 ist vorerst von den weiteren Anlagenteilen durch das Umschaltmagnetventil 18 getrennt. Die frisch eingefüllte Flüssigkeit nimmt allmählich das Temperaturniveau des Innenraumes des Gerätegehäuses 31 an. Zwischenzeitlich wird das temperierte Zugabemittel aus dem nicht frisch gefüllten Speicherbehälter 12 bzw. 13 über das Umschaltmagnetventil 18, dem Ablaufhahn 19, dem Filtereintrittshahn 22, einem Reinigungsfilter 23 oder 24, dem Filterablaufhahn 25 zum Verteilerhahn 26 geleitet. Die möglichen Umgehungsleitungen können bei Bedarf geschaltet werden. Vom Verteilerhahn 26 gelangt das Zugabemittel über den Flüssigkeitsdurchflußmesser 28 in den weiteren Verteilerhahn 27. Der dabei gewonnene Meßwert wird nach Aufbereitung dem Anzeigegerät 44 sowie den Dosierpumpen 33 bzw. 34 zu vorbeschriebenen Zwecken zugeleitet. Im Bedarfsfall kann auch die Bypassleitung 28a geschaltet werden. Vom Ausgang des Verteilerhahnes 27 wird das Zugabemittel zum Pulsationsdämpfer 30 geleitet. Der über das Einlaufmagnetventil 17 mit dem Ausgleichsgefäß 7 in Verbindung stehende Pulsationsdämpfer 30 sorgt dafür, daß die von den nachgeschalteten Dosierpumpen 33 bzw. 34 herrührenden Schwingungen im Zugabemittel nicht oder nur sehr gedämpft in den Flüssigkeitsdurchflußmesser 28 gelangen. Die sich an die Dosierpumpen 33 bzw. 34 anschließende gemeinsame Ausgangsleitung 39 führt zum Extruder 40.

**Patentansprüche**

1. Vorrichtung zum dosierten Einspeisen flüssiger Komponenten, insbesondere Vernetzungsmittel, zu dem in einem Extruder für die Extrusion kunststoffisolierter Kabel vorgesehenen Kunststoffbasismaterial, mit folgenden durch für die Fortleitung der flüssigen Komponenten dienenden Leitungen verbundenen Bauelementen: eine Förderpumpe (1) und ein mit dieser verbundener Speicherbehälter (12) mit einem Maximalkontakt (14a), eine diesem Speicherbehälter (12) nachgeschaltete Dosierpumpe (33) sowie Magnetventile (9, 18), ein Durchflußmesser (28) und ein Pulsationsdämpfer (30), gekennzeichnet durch die folgenden Merkmale:

(a) das erste Magnetventil (9) ist dem Speicherbehälter (12) vorgeschaltet und diesem Speicherbehälter ein weiterer Speicherbehälter (13) mit vorgeschaltetem Magnetventil (11) parallel geschaltet und jeder Speicherbehälter (12, 13) enthält jeweils eine Sonde (14, 15) mit Maximal- (14a, 15a) und Minimalkontakten (14b, 15b);

(b) ein weiteres als Umschaltventil ausgebildetes Magnetventil (18) ist mit den Ausgängen des Speicherbehälters (12, 13) verbunden, wobei das Umschaltventil (18), die beiden Magnetventile (9, 11) und die Maximalkontakte (14a, 15a) und Minimalkontakte (14b, 15b) des Speicherbehälters (12, 13) schaltungstechnisch in einer solchen Weise miteinander verknüpft sind, daß der eine Speicherbehälter (z. B. 13) durch dieses Umschaltventil (18) von der abgehenden Leitung zu dem nachgeschalteten Anlagenteil so lange getrennt ist, bis die Entleerung des anderen Speicherbehälters (z. B. 12) erfolgt ist, und dies durch den Minimalkontakt (z. B. 14) gemeldet wird, womit durch das Umschaltventil (18) der eine Speicherbehälter (z. B. 13) mit der abgehenden Leitung verbunden wird und durch Öffnung des Magnetventils (z. B. 9) der andere Speicherbehälter (z. B. 12) gefüllt wird;

(c) dem Umschaltventil (18) ist ein Dreiwegehahn (22) und diesem sind zwei parallelgeschaltete Reinigungsfilter (23, 24) nachgeschaltet;

(d) der Durchflußmesser (28) ist an die zusammengeschalteten Ausgänge der Filter (23, 24) angeschlossen;

(e) der Pulsationsdämpfer (30) ist an den Durchflußmesser (28) angeschlossen;

(f) zwischen der Speiseleitung (6) zu den Magnetventilen (9, 11) und dem Pulsationsdämpfer (30) ist die Reihenschaltung eines Ausgleichsgefäßes (7) und eines Magnetventils (17) angeschlossen, wobei das Magnetventil (17) beim Umschalten des Umschaltventils (18) so lange geöffnet wird, bis der Behälter des Pulsationsdämpfers (30) aufgefüllt ist;

(g) an den Pulsationsdämpfer (30) ist die Dosierpumpe (33) angeschlossen, welcher eine weitere Dosierpumpe (34) parallel geschaltet ist, welche beide mit je einem drehzahlgeregelten Antriebsmotor gekuppelt sind, deren Drehzahl z. B. in Abhängigkeit eines an einem Potentiometer (43) einstellbaren Soll-Wertes regelbar ist;

(h) es sind Mittel vorgesehen, durch welche der im Flüssigkeitsdurchflußmesser (28) ermittelte Ist-Wert einem Anzeigegerät (44) mit einstellbaren Toleranzmarken (44a und 44b) zugeführt wird, wobei bei einer Überschreitung einer dieser Toleranzmarken automatisch von der einen in Betrieb befindlichen Dosierpumpe (33 bzw. 34) auf die andere Dosierpumpe (34 bzw. 33) umgeschaltet wird;

(i) die Ausgänge der Dosierpumpen (33, 34) sind über Leitungen mit dem Extruder (40) verbunden.

2. Vorrichtung nach Anspruch 1, dadurch gekennzeichnet, daß die Speicherbehälter (12, 13) und der Pulsationsdämpfer (30) auf gleichem Höhenniveau angeordnet sind.

3. Vorrichtung nach einem der Ansprüche 1 oder 2, dadurch gekennzeichnet, daß den Magnetventilen (9, 11) Absperrhähne (8, 10) parallel und dem Umschaltventil (18) ein Absperrhahn (19) nachgeschaltet ist und daß zwischen den Ausgängen der Speicherbehälter (12, 13) und dem Ausgang des Absperrhahnes (20) durch Absperrhähne (20, 21) schließbare Verbindungsleitungen angeordnet sind.

4. Vorrichtung nach Anspruch 1, 2 oder 3, dadurch gekennzeichnet, daß die Maximalkontakte (14a und 15a) galvanisch verbunden sind mit den Absperrmagnetventilen (9, 11), der Förderpumpe (1) und einer Füllstandsanzeige (16).

5. Vorrichtung nach Anspruch 1, 2, 3 oder 4, dadurch gekennzeichnet, daß die Minimalkontakte (14b und 15b) galvanisch verbunden sind mit den Absperrmagnetventilen (9, 11), der Förderpumpe (1), der Füllstandsanzeige (16), dem Einlaufmagnetventil (17) und dem Umschaltmagnetventil (18).

6. Vorrichtung nach einem oder mehreren der vorhergehenden Ansprüche 1 bis 5, dadurch gekennzeichnet, daß parallel zum handbetätigbaren Ablaufhahn (19) zwei handbetätigbare, weitere Ablaufhähne (20, 21) vorgesehen sind.

7. Vorrichtung nach einem oder mehreren der vorhergehenden Ansprüche 1 bis 6, dadurch gekennzeichnet, daß die drei Ablaufhähne (19, 20, 21) gemeinsam auf einen Filtereinlaßhahn (22) arbeiten.

8. Vorrichtung nach einem oder mehreren der vorhergehenden Ansprüche 1 bis 7, dadurch gekennzeichnet, daß dem Filterablaufhahn (25) zwei durch eine Bypassleitung (28a) verbundene Verteilerhähne (26, 27) nachgeschaltet sind.

9. Vorrichtung nach einem oder mehreren der vorhergehenden Ansprüche 1 bis 8, dadurch gekennzeichnet, daß parallel zur Bypassleitung (28a) der in einem Gehäuse (29) eingebrachte Flüssigkeitsdurchflußmesser (28) angeordnet ist.

10. Vorrichtung nach einem oder mehreren der vorhergehenden Ansprüche 1 bis 9, dadurch gekennzeichnet, daß der Ausgang des weiteren Verteilerhahnes (27) mit dem Pulsationsdämpfer (30) verbunden ist.

11. Vorrichtung nach einem oder mehreren der vorhergehenden Ansprüche 1 bis 10, dadurch gekennzeichnet, daß jeder der beiden Dosierpumpen (33, 34) zwei handbetätigbare Pumpenhähne (35, 36 bzw. 37, 38) zugeordnet sind.

12. Vorrichtung nach einem oder mehreren der vorhergehenden Ansprüche 1 bis 11, dadurch gekennzeichnet, daß die beiden Dosierpumpen (33, 34) gemeinsam angeschlossen sind an einer Ausgangsleitung (39), die mit dem Extruder (40) in Verbindung steht.

13. Vorrichtung einem oder mehreren der vorhergehenden Ansprüche 1 bis 12, dadurch gekennzeichnet, daß die Anlagenteile (12 bis 15 und 18 bis 30) in einem Gerätegehäuse (31) untergebracht sind und daß Mittel vorgesehen sind, durch welche im Gerätegehäuse (31) eine konstante Temperatur einstellbar ist.

14. Vorrichtung nach einem oder mehreren der vorhergehenden Ansprüche 1 bis 13, dadurch gekennzeichnet, daß zur Nullpunktverschiebung auf dem Anzeigegerät (44) ein Eichpotentiometer vorgesehen ist.

15. Vorrichtung nach einem oder mehreren der vorhergehenden Ansprüche 1 bis 14, dadurch gekennzeichnet, daß im und/oder am Gerätegehäuse (31) Meßfühler zur Überwachung der Konzentration der Zugabemitteldämpfe angeordnet sind.

## Claims

1. A device for feeding measured quantities of liquid components, in particular interlacing agents, into a plastic base material provided in an extruder for the extrusion of plastic-insulated cables, comprising the following structural components interconnected by the conduits necessary to conduct the liquid components: a feed pump (1) and a storage tank (12) with a maximum contact (14a) communicating therewith, a dosing pump (33) connected to the outlet end of the said storage tank (12), as well as solenoid valves (9, 18) a flow meter (28) and a pulsation damper (30), characterized in that

(a) the said first solenoid valve (9) is provided at the inlet end of the said storage tank (12) and another storage tank (13) with a solenoid valve (11) provided at its inlet end is connected in parallel to the said storage tank (12), each of the storage tanks (12, 13) comprising one probe (14, 15) with maximum (14a, 15a) and minimum contacts (14b, 15b); that

(b) a further solenoid valve (18) taking the form of a reversing valve is connected to the outlets of the storage tanks (12, 13), the reversing valve (18), the two solenoid valves (9, 11), the maximum contacts (14a, 15a) and the minimum contacts (14b, 15b) of the storage tanks (12, 13) being interconnected by an appropriate circuitry ensuring that one storage tank (for instance 13) is cut off by the said reversing valve (18) from the outgoing line connecting it with the downstream portion of the system until complete drainage of the other storage tank (for instance 12) and until this fact has been signalled by the minimum contact (for instance 14b), whereupon the reversing valve (18) will connect the one storage tank (for instance 13) to the outgoing line and the solenoid valve (for instance 10) will be opened to permit filling of the other storage tank (for instance 12); that

(c) a three-way cock (22) is provided downstream of the said reversing valve (18) and followed by two cleaning filters (23, 24) connected in parallel; that

(d) the flow meter (28) is connected to the interconnected outlets of filters (23, 24); that

(e) the pulsation damper (30) is connected to the flow meter (28); that

(f) there is connected between the feed line (6) to the solenoid valves (9, 11) and the pulsation damper (30) the series circuit of an expansion tank (7) and a solenoid valve (17) so that when the reversing valve (18) is switches over the solenoid valve (17) will be opened until the tank of the pulsation damper (30) is filled up; that

(g) the dosing pump (33) is connected to the pulsation damper (30) and has another dosing pump (34) connected to it in parallel, each of the said pumps being coupled to a speed-controlled drive motor whose speed may be controlled for instance in response to a reference value which can be preset at a potentiometer (43); that

(h) there are provided means for supplying the actual value picked up in the flow meter (28) to an indicating instrument (44) having adjustable tolerance marks (44a and 44b), and that when one of the said tolerance marks is exceeded, the dosing pump (33 or 34) then in operation is switched off and the other dosing pump (34 or 33) is switched on; and that

(i) the outlets of the dosing pumps (33, 34) communicate via conduits with the extruder (40).

2. A device in accordance with claim 1, characterized in that the storage tanks (12, 13) and the pulsation damper (30) are provided at the same height.

3. A device in accordance with claim 1 or 2, characterized in that the solenoid valves (9, 11) have connected to them in parallel shut-off cocks (8, 10), that the reversing valve (18) has connected to its downstream end a shut-off cock (19) and that connection lines which can be shut off by shut-off cocks (20, 21), are provided between the outlets of the storage tanks (12, 13) and the outlet of the shut-off cock (20).

4. A device in accordance with claim 1, 2 or 3, characterized in that the maximum contacts (14a and 15a) are electrically connected with the shut-off solenoid valves (9, 11), the feed pump (1) and a level indicator (16).

5. A device in according with claim 1, 2, 3 or 4, characterized in that the minimum contacts (14b and 15b) are electrically connected with the shut-off solenoid valves (9, 11), the feed pump (1), the level indicator (16), the inlet solenoid valve (17) and the reversing solenoid valve (18).

6. A device in accordance with any one or more of the preceding claims 1 to 5, characterized in that there are connected in parallel to the manually operable drain cock (19) two manually operable additional drain cocks (20, 21).

7. A device in accordance with any one or more of the preceding claims 1 to 6, characterized in that the three drain cocks (19, 20, 21) commonly act upon one filter inlet cock (22).

8. A device in accordance with any one or more of the preceding claims 1 to 7, characterized in that the filter drain cock (25) has its outlet end connected to two distributor cocks (26, 27) communicating via a by-pass line (28a).

9. A device in accordance with any one or more of the preceding claims 1 to 8, characterized in that the flow meter (28) provided in a housing (29) is arranged in parallel to the by-pass line (28a).

10. A device in accordance with any one or more of the preceding claims 1 to 9, characterized in that the outlet of the other distributor cock (27) is connected to the pulsation damper (30).

11. A device in accordance with any one or more of the preceding claims 1 to 10, characterized in that there are associated to each of the two dosing pumps (33, 34) two manually operable pump cocks (35, 36/37, 38).

12. A device in accordance with any one or more of the preceding claims 1 to 11, characterized in that the two dosing pumps (33, 34) are jointly connected to an outlet line (39) communicating with the extruder (40).

13. A device in accordance with any one or more of the preceding claims 1 to 12, characterized in that the components (12 to 15 and 18 to 30) of the system are installed in a housing (31) and that means are provided for adjusting a constant temperature within the said housing (31).

14. A device in accordance with any one or more of the preceding claims 1 to 13, characterized in that a calibrating potentiometer is provided to permit shifting of the zero-point on the indicator (44).

15. A device in accordance with any one or more of the preceding claims 1 to 14, characterized in that sensors are provided in and/or on the said housing (31) for monitoring the concentration of the additive vapours.

**Revendications**

1. Dispositif pour l'introduction dosée de composants liquides, et notamment d'agents de réticulation, dans la matière plastique de base prévue dans une extrudeuse pour la production de câbles sous isolation plastique, avec les organes suivants reliés par des canalisations pour la transmission des composants liquides: une pompe de circulation (1) et un réservoir (12) relié à ladite pompe et muni d'un contact maxi (14a), une pompe doseuse (33) montée en aval dudit réservoir (12), des électrovannes (9, 18), un débitmètre (28) et un amortisseur de pulsations (30), ledit dispositif étant caractérisé en ce que:

a) la première électrovanne (9) est disposée en amont du réservoir (12) qui est branché en parallèle avec un second réservoir (13) à l'électrovanne (11) en amont, et chaque réservoir (12, 13) contient une sonde (14, 15) à contacts maxi (14a, 15a) et mini (14b, 15b);

b) une seconde électrovanne (18) réalisée sous forme d'une vanne d'inversion, est reliée aux sorties du réservoir (12, 13), la vanne d'inversion (18), les deux électrovannes (9, 11) et les contacts maxi (14a, 15a) et mini (14b, 15b) étant interconnectés de façon que la vanne d'inversion (18) isole un premier réservoir (13) par exemple de la canalisation partant vers la partie de l'installation en aval jusqu'à que la vidange du second réservoir (12 par exemple) soit terminée, avec signalisation par le contact mini (14b par exemple), de sorte que la vanne inverseuse (18) relie ainsi le premier réservoir (13 par exemple) à la canalisation partante et le second réservoir (12 par exemple) se remplit par ouverture de l'électrovanne (9 par exemple);

c) un robinet à 3 voies (22) est monté en aval de la vanne d'inversion (18) et deux filtres d'épuration en parallèle (23, 24) sont montés en aval dudit robinet;

d) le débitmètre (28) est relié aux sorties réunies des filtres (23, 24);

e) l'amortisseur de pulsations (30) est relié au débitmètre (28);

f) le montage en série d'un récipient de détente (7) et d'une électrovanne (17) est branché entre la canalisation d'alimentation (6) des électrovannes (9, 11) et l'amortisseur de pulsations (30), l'électrovanne (17) s'ouvrant lors de la manoeuvre de la vanne d'inversion (18) jusqu'à ce que le réservoir de l'amortisseur de pulsations (30) soit rempli;

g) la pompe doseuse (33) est reliée à l'amortisseur de pulsations (30) et en parallèle avec une seconde pompe doseuse (34), ces deux pompes étant accouplées chacune à un moteur d'entraînement à vitesse de rotation réglable en fonction par exemple d'une valeur de consigne ajustable sur un potentiomètre (43);

h) des moyens sont prévus pour transmettre la valeur instantanée, déterminée par le débitmètre à liquide (28), à un appareil indicateur (44) à index de tolérance ajustables (44a et 44b), le dépassement d'un de ces index produisant la commutation automatique de la pompe doseuse en service (33 ou 34) sur l'autre pompe doseuse (34 ou 33); et

i) les sorties des pompes doseuses (33, 34) sont reliées par des canalisations à l'extrudeuse (40).

2. Dispositif selon revendication 1, caractérisé en ce que les réservoirs (12, 13) et l'amortisseur de pulsations (30) sont disposés à la même hauteur.

3. Dispositif selon une des revendications 1 ou 2, caractérisé en ce que des robinets d'isolement (8, 10) sont montés en parallèle avec les électrovannes (9, 11) et un robinet d'isolement (19) est monté en aval de la vanne d'inversion (18); et des lignes de liaison isolables par des robinets (20, 21) sont disposées entre les sorties des réservoirs (12, 13) et la sortie du robinet d'isolement (20).

4. Dispositif selon une quelconque des revendication 1 à 3, caractérisé en ce que les contacts maxi (14a et 15a) sont reliés galvaniquement aux électrovannes d'isolement (9, 11), à la pompe de circulation (1) et à un indicateur de niveau (16).

5. Dispositif selon une quelconque des revendications 1 à 4, caractérisé en ce que les contacts mini (14b et 15b) sont reliés galvaniquement aux électrovannes d'isolement (9, 11), à la pompe de circulation (1), à l'indicateur de niveau (16), à l'électrovanne d'entrée (17) et à l'électrovanne d'inversion (18).

6. Dispositif selon une quelconque des revendications 1 à 5, caractérisé en ce que deux autres robinets de vidange (20, 21) à commande manuelle sont prévus en parallèle avec le robinet de vidange (19) à commande manuelle.

7. Dispositif selon une quelconque des revendications 1 à 6, caractérisé en ce que les trois robinets de vidange (19, 20, 21) fonctionnent en commun sur un robinet d'entrée de filtre (22).

8. Dispositif selon une quelconque des revendications 1 à 7, caractérisé en ce que deux robinets distributeurs (26, 27), reliés par une canalisation de dérivation (28a), sont montés en aval du robinet de vidange de filtre (25).

9. Dispositif selon une quelconque des revendications 1 à 8, caractérisé en ce que le débitmètre liquide (28), logé dans un boîtier (29), est monté en parallèle avec la canalisation de dérivation (28a).

10. Dispositif selon une quelconque des revendications 1 à 9, caractérisé en ce que la sortie du second robinet distributeur (27) est reliée à l'amortisseur de pulsations (30).

11. Dispositif selon une quelconque des revendications 1 à 10, caractérisé en ce que deux robinets à commande manuelle (35, 36 ou 37, 38) sont affectés à chacune des deux pompes doseuses (33, 34).

12. Dispositif selon une quelconque des revendications 1 à 11, caractérisé en ce que les deux pompes doseuses (33, 34) sont reliées en un point commun d'une canalisation de sortie (39) reliée à l'extrudeuse (40).

13. Dispositif selon une quelconque des revendications 1 à 12, caractérisé en ce que les parties de l'installation (12 à 15 et 18 à 30) sont logées dans un boîtier (31); et des moyens sont prévus pour ajuster une température constante dans le boîtier (31).

14. Dispositif selon une quelconque des revendications 1 à 14, caractérisé en ce qu'un potentiomètre d'étalonnage est prévu pour le décalage du zéro de l'indicateur (44).

15. Dispositif selon une quelconque des revendications 1 à 14, caractérisé en ce que des capteurs sont disposés dans et/ou sur le boîtier (31) pour surveiller la concentration en vapeurs d'additons.

FIG. 2